# EUROPÄISCHE PATENTSCHRIFT

(11) **EP 1 919 346 B1**
(45) Veröffentlichungstag und Bekanntmachung des Hinweises auf die Patenterteilung: **06.10.2010**
(21) Anmeldenummer: 06777708.6
(22) Anmeldetag: 11.07.2006
(51) Int. Cl.: A47L 15/42, B01D 29/66

(54) **GESCHIRRSPÜLMASCHINE, INSBESONDERE HAUSHALT-GESCHIRRSPÜLMASCHINE UND VERFAHREN ZUM BETREIBEN DERSELBEN**
DISHWASHER, IN PARTICULAR DOMESTIC DISHWASHER, AND METHOD FOR OPERATING SAID DISHWASHER
LAVE-VAISSELLE, NOTAMMENT LAVE-VAISSELLE MENAGER ET PROCEDE D'UTILISATION ASSOCIE

(30) Priorität: 10.08.2005 DE 102005037903
(43) Veröffentlichungstag der Anmeldung: 14.05.2008
(73) Patentinhaber: BSH Bosch und Siemens Hausgeräte GmbH, 81739 München (DE)
(72) Erfinder: CLASSEN, Egbert, 86637 Wertingen (DE); JERG, Helmut, 89537 Giengen (DE); NANNT, Hans-Peter, 89547 Gerstetten (DE); RIEGER, Roland, 73492 Rainau (DE)
(86) Internationale Anmeldenummer: PCT/EP2006/064108
(87) Internationale Veröffentlichungsnummer: WO 2007/017330

(56) Entgegenhaltungen:
- DE-A1- 10 244 242
- DE-A1- 10 244 243
- DE-A1- 10 309 008
- US-A- 5 909 743

## Beschreibung

Die Erfindung betrifft eine Geschirrspülmaschine, insbesondere eine Haushalt-Geschirrspülmaschine, mit wenigstens einem im Wesentlichen geschlossenen Wasserkreislauf, in dem Spülflotte nach Maßgabe einer Programmsteuereinheit in einer ersten Richtung umgewälzt wird, wobei die Spülflotte beim Umwälzen zur Filterung von Verunreinigungen durch ein Filterelement gefördert wird. Die Erfindung betrifft weiterhin ein Verfahren zum Betreiben einer Geschirrspül maschine.

Beim Betreiben einer Geschirrspülmaschine werden je nach Verschmutzungsgrad des zu reinigenden Spülguts größere und kleinere Verunreinigungen durch die Spülflüssigkeit vom Spülgut abgelöst. Um zu verhindern, dass durch während eines Spülprogrammabschnitts umgewälzte Spülflüssigkeit die bereits von dem Spülgut abgelösten Verunreinigungen wieder auf das Spülgut aufgebracht werden, sind bei bekannten Geschirrspülmaschinen mehr oder weniger komplexe Filteranordnungen im Bereich der Spülwanne bzw. des Pumpentopfs angeordnet.

Eine im Pumpentopf der Geschirrspülmaschine angebrachte Filteranordnung besteht dabei häufig aus einem Grobsieb, welches Verunreinigungen mit großem Durchmesser aus der Spülflotte ausfiltert, einem Feinsieb, dessen Maschendurchmesser im Bereich von 0,9 bis 1,1 mm liegt, sowie einem dem Feinsieb nachgeschalteten Mikrosieb, dessen Maschenweite ca. 0,3 mm beträgt, um auch kleine Verunreinigungen aus der Spülflüssigkeit zu filtern. Diese Anordnung kann nach Art einer Parallelschaltung um ein weiteres Feinsieb ergänzt sein. Zweck einer derartigen Filteranordnung ist es, während des Umwälzens der Spülflotte, einen möglichst großen Anteil an Verunreinigungen aus der Spülflotte auszufiltern. Beim Abpumpen der Spülflotte, z.B. beim Wechsel von einem Spülprogrammabschnitt zum nächsten Spülprogrammabschnitt soll ein möglichst großer Teil der Verunreinigungen aus dem Spülbehälter der Geschirrspülmaschine gefördert werden, um ein gutes Spülergebnis zu erzielen.

Ein Nachteil dieser Filteranordnung besteht darin, dass sehr großflächige Siebe verwendet werden müssen. Dies ist notwendig, da an den Sieben der Filteranordnung Verunreinigungen angelagert werden, welche zu einem Zusetzen der Siebe führen können. Weiterhin kann durch die großflächige Ausführung der Siebe sichergestellt werden, dass der Zufluss zu einer die Umwälzung bewirkenden Pumpe gewährleistet ist. Dies ist deshalb notwendig, da die Pumpe bei einer herkömmlichen Filteranordnung einen lediglich geringen bis vernachlässigbaren Unterdruck zum Ansaugen der Spülflotte erzeugt. Eine weitere Notwendigkeit großflächiger Siebe ergibt sich aus dem Umstand, dass das Zusetzen der einzelnen Siebe den Anteil des Volumenstroms beeinflusst, welcher über den Hauptstrom oder über den Nebenstrom geleitet wird. Ein weiterer, prinzip-bedingter Nachteil besteht darin, dass grobe Verunreinigungen im Pumpentopf gehalten werden, wodurch diese eine "Angriffsfläche" für den bei einem Spülvorgang eingesetzten Reiniger darstellt. Dieser wird dadurch in seiner Wirkung verringert und kann der ihm eigentlich zugedachten Aufgabe, Schmutz auf verunreinigtem Spülgut zu entfernen, nicht mehr vollständig gerecht werden.

Es ist deshalb notwendig, dass zumindest manche der Filterelemente der Filteranordnung zeitweise manuell durch einen Nutzer der Geschirrspülmaschine aus dieser entfernt und manuell gereinigt werden. Um dem Nutzer einer Geschirrspülmaschine eine derart unangenehme Tätigkeit zu ersparen, wäre es wünschenswert, wenn die Filteranordnung vom selbstreinigenden Typ wäre.

Eine Geschirrspülmaschine mit einem derartigen selbstreinigenden Filter ist beispielsweise aus der US 3,179,116 bekannt. Der Filter besteht dabei aus einer Schraubenfeder, wobei die Abstände übereinander liegender Spiralabschnitte variabel einstellbar sind. Beim Umwälzen der Spülflüssigkeit von der Spülwanne zu den Spülarmen weist die Feder eine kleine Länge und damit geringe Spiralabschnittabstände auf, so dass von dem Spülgut abgelöste Verunreinigungen durch die Spiralfeder gefiltert werden. Beim Abpumpen der Spülflüssigkeit, welches durch eine veränderte Drehrichtung der Pumpe bewirkt wird, wird die Länge der Spiralfeder vergrößert, wodurch sich der Abstand zwischen zwei benachbarten Federabschnitten vergrößert, so dass die an der Spiralfeder haftenden Verunreinigungen durch die abgepumpte Spülflüssigkeit in das Innere der Spiralfeder gespült und schließlich dem Wasserablauf zugeführt werden. Das Verändern der Länge der Spiralfeder wird durch in den Leitungen erzeugten Wasserdruck vorgenommen, der abhängig von der Laufrichtung einer Umwälzpumpe ist. Während des Umwälzens wird in einer mit der Spiralfeder verbundenen Leitung ein nur geringer Wasserdruck erzeugt, wodurch die Spiralfeder in ihrer Länge verkürzt bleibt. Beim Abpumpen wird hingegen in der mit der Spiralfeder verbundenen Leitung ein hoher Druck erzeugt, wodurch über einen Hebelmechanismus die Spiralfeder verlängert wird.

Ein Nachteil der beschriebenen Anordnung besteht darin, dass die Selbstreinigung des Filters lediglich beim Wechsel von einem zum nächsten Spülprogrammabschnitt erfolgen kann. Wird der Filter jedoch während eines Spülprogrammabschnitts mit einer großen Menge an Verunreinigungen beaufschlagt, so kann durch die Pumpe nicht mehr genug Spülflüssigkeit zum Beaufschlagen des Spülguts umgewälzt werden. Die vorgeschlagene Anordnung nimmt deshalb in Kauf, dass die Reinigungswirkung einzelner Spülprogrammabschnitte erniedrigt werden darf. Weiterhin kann eine vollständige Reinigung des Filterelements konstruktiv nicht gewährleistet werden, insbesondere bei solchen Verunreinigungen, die den Abstand zwischen zwei benachbarten Federabschnitten übersteigen.

Aus der DE-OS 2 249 603, der DE-OS 29 22 549 sowie der DE 200 10 933 U1 sind schließlich Filter für den großindustriellen Einsatz bekannt, welche aufgrund ihrer variablen Filterabstände bzw. -durchmesser (selbst-)reinigende Eigenschaften aufweisen.

Ferner ist aus der DE 103 09 008 A1 eine Vorrichtung zum Filtern der Spülflüssigkeit einer Geschirrspülmaschine bekannt. Zur Reduzierung des Wasserverbrauchs der Geschirrspülmaschine wird ein Filtersystem offenbart, das aus einem Sieb und einem Stellglied besteht, die in einem Abpumpbereich angeordnet sind. Das Sieb ist abströmseitig mit dem Spülbottich verbunden. Sieb und Stellglied sind anströmseitig so angeordnet, dass der abgelagerte Schmutz bei geöffnetem Stellglied aus der Geschirrspülmaschine ausgespült wird. Ein Nachteil dieser Vorrichtung besteht darin, dass für eine Geschirrspülmaschine, die nach dem Ein-Motoren-Prinzip arbeitet, das heißt bei der für den Abpump- und den Spülvorgang lediglich eine einzige Pumpe vorgesehen ist, die Pumpe stärker ausgelegt werden muss, da das Sieb den Wasserwiderstand mit zunehmender Verschmutzung erhöht. Hierdurch steigen in unerwünschter Weise die Herstellungskosten der Geschirrspülmaschine und weiterhin muss mit einem erhöhten Geräusch-Niveau gerechnet werden. Da die Verunreinigungen bis zum Abpumpen derselben aus der Geschirrspülmaschine im Wasserkreislauf zum Reinigen des Spülguts gehalten werden, wird die Wirk-Effizienz eines Reinigungsmittels, wie eingangs bereits dargelegt, verringert und steht deshalb nicht mehr zur Schmutzlösung auf dem verunreinigten Spülgut zur Verfügung. Sofern die Verunreinigungen deshalb nicht regelmäßig aus der Geschirrspülmaschine entfernt werden, ist damit zu rechnen, dass die Reinigungsleistung der Geschirrspülmaschine mit zunehmendem Betrieb abnimmt.

Aus der DE-10 244 243 A1 ist ein Geschirrspüler bekannt der ein Schmutzfilter umfasst, wobei eine Spülvorrichtung zur Reinigung des Schmutzfilters vorgesehen ist.

Die Aufgabe der vorliegenden Erfindung besteht darin, eine Geschirrspülmaschine, insbesondere eine Haushalt-Geschirrspülmaschine, anzugeben, welche eine manuelle Reinigung eines zum Rückhalten von Verunreinigungen eingesetzten Filterelements überflüssig macht, wobei die qualitativen Eigenschaften der Geschirrspülmaschine hinsichtlich Energieverbrauch und Reinigungsleistung optimiert sein sollen. Weiterhin soll ein Verfahren zum Betreiben einer derartigen Geschirrspülmaschine angegeben werden.

Diese Aufgabe wird durch eine erfindungsgemäße Geschirrspülmaschine, insbesondere eine Haushalt-Geschirrspülmaschine, gelöst, welche wenigstens einen im wesentlichen geschlossenen Wasserkreislauf aufweist, in dem die Spülflotte nach Maßgabe einer Programmsteuereinheit in einer ersten Richtung umgewälzt wird, wobei die Spülflotte beim Umwälzen zur Filterung von Verunreinigungen durch ein Filterelement gefördert wird. Erfndungsgemäß ist eine Einrichtung zur Strömungsrichtungsumkehr vorgesehen, durch welche ein Umwälzen der Spülflotte in einer zweiten, der ersten Richtung entgegen gesetzten, Richtung zum Durchströmen und Beseitigen von Verunreinigungen eines ersten Siebs ermöglicht wird und bei der das erste Sieb derart in dem Wasserkreislauf angeordnet ist, dass dieses beim Umwälzen der Spülflotte sowohl in der ersten als auch in der zweiten Richtung zwangsdurchströmt ist oder zwangsdurchströmbar ist.

Die Aufgabe wird ferner durch ein Verfahren zum Betreiben einer Geschirrspülmaschine, insbesondere einer Haushalt-Geschirrspülmaschine, gelöst, bei dem in einem im wesentlichen geschlossenen Wasserkreislauf die Spülflotte nach Maßgabe einer Programmsteuereinheit in einer ersten Richtung umgewälzt und zur Filterung von Verunreinigungen durch ein Filterelement gefördert wird, wobei zur Reinigung eines ersten Siebs eine Strömungsrichtungsumkehr der Spülflotte durch das erste Sieb bewirkt wird, so dass die Spülflotte in einer zweiten, der ersten Richtung entgegengesetzten, Richtung durch das erste Sieb gefördert wird.

Die Anordnung des ersten Siebs in einem zwangsdurchströmten Abschnitt des Wasserkreislaufes, unabhängig von der Strömungsrichtung der Spülflotte während eines Umwälzvorganges, erlaubt einen konstruktiv einfachen Aufbau einer Geschirrspülmaschine, da auf eine herkömmliche Filteranordnung, bestehend aus Grob-, Fein- und Mikrosieb am Boden des Spülbehälters, verzichtet werden kann. Die Anordnung in einem zwangsdurchströmten Abschnitt des ersten Siebs sorgt deshalb dafür, dass sich dieses während des Betriebs der Geschirrspülmaschine gegenüber herkömmlichen Filteranordnungen schneller mit Verunreinigungen belegen wird. Aus diesem Grund ist eine Selbstreinigung des ersten Siebs vorgesehen, die durch eine Strömungsrichtungsumkehr der Spülflotte durch das erste Sieb bewirkt wird. Dadurch, dass das erste Sieb während eines Reinigungsvorganges des Siebs in entgegen gesetzter Richtung von der Spülflotte durchströmt ist, wird eine zuverlässige und effektive Reinigung des ersten Siebs bewirkt.

Vorteilhafte Ausgestaltungen ergeben sich jeweils aus den abhängigen Patentansprüchen.

Zur Realisierung der Zwangsdurchströmung des ersten Siebs durch die Spülflotte ist gemäß einer ersten Ausführungsform vorgesehen, das erste Sieb in einer einen Pumpentopf und eine Pumpe verbindenden Leitung im Saugbereich der Pumpe anzuordnen. Alternativ kann vorgesehen sein, das erste Sieb in einer die Pumpe und Sprüheinrichtungen, z.B. Sprüharme, verbindenden Leitung im Druckbereich der Pumpe anzuordnen. Im Gegensatz zu herkömmlichen Filteranordnungen, welche im Bereich der Spülwanne bzw. des Pumpentopfes angeordnet und nicht im Saugbereich der Pumpe gelegen sind, wird das erste Sieb in relativer Nähe zu einem Saug- bzw. Druckbereich der die Umwälzung bewirkenden Pumpe angeordnet. Ein Durchströmen des ersten Siebs mit Spülflotte und anlagern von Verunreinigungen an diesem ist immer dann gewährleistet, wenn die Pumpe in Betrieb ist. Im Gegensatz dazu ist bei herkömmlichen Filteranordnungen der Einsatz der Pumpe für das Durchströmen der Filteranordnung nicht von Nöten, da hier das Schwerkraftprinzip verwendet wird. Im Falle einer übermäßigen Belegung der herkömmlichen Filteranordnung mit Verunreinigungen kann es deshalb zu einem Leerlauf der Pumpe kommen, bei welchem keine Spülflüssigkeit mehr in den Ansaugbereich zufließen kann.

In einer weiteren Ausführungsform ist das erste Sieb als variables Sieb ausgebildet, das beim Umwälzen der Spülflotte in der ersten Richtung eine andere Maschenweite als beim Umwälzen der Spülflotte in der zweiten Richtung aufweist. Dabei ist es insbesondere vorteilhaft, wenn die Maschenweite beim Umwälzen der Spülflotte in der ersten Richtung kleiner ist, als die Maschenweite beim Umwälzen der Spülflotte in der zweiten Richtung. Hierdurch wird einerseits eine gute Filterung der Spülflotte von Verunreinigungen bewirkt und andererseits wird die Reinigung des Siebs während des Betriebs in Strömungsrichtungsumkehr, d.h. bei Durchströmen in zweiter Richtung, erleichtert.

Um eine möglichst gute Reinigungswirkung der Spülflotte während des Umwälzens in der ersten Richtung zu erzielen, ist es gemäß einer weiteren Ausführungsform vorgesehen, das Sieb beim Umwälzen der Spülflotte in der ersten Richtung als Mikrosieb auszubilden. Der Begriff des Mikrosiebs ist dahingehend zu verstehen, dass die Maschenweite des ersten Siebs beim Umwälzen der Spülflotte in der ersten Richtung entsprechend der Maschenweite eines Mikrosiebs einer herkömmlichen Filteranordnung bemessen ist.

In einer weiteren Ausführungsform ist vorgesehen, dass die Belegung des ersten Siebs mit Verunreinigungen sensorisch ermittelt wird, um bei Überschreiten eines vorgegebenen Parameter-Grenzwertes eine Strömungsrichtungsumkehr zu veranlassen. Als Parameter zur Überwachung der Belegung des ersten Siebs wird z.B. der im Saug- und/oder Druckbereich der Pumpe herrschende Druck herangezogen, der durch einen entsprechend ausgebildeten Sensor ermittelbar ist. Alternativ oder zusätzlich kann als Parameter zur Überwachung der Belegung des ersten Siebs die Drehzahl der Pumpe herangezogen werden. Je nach Festlegung des vorgegebenen Parameter-Grenzwerts bzw. der vorgegebenen Parameter-Grenzwerte kann die Strömungsrichtungsumkehr bereits bei einer geringen Belegung des ersten Siebs mit Verunreinigungen veranlasst werden. Die Festlegung des Parameter-Grenzwerts bzw. der Parameter-Grenzwerte kann durch einen Fachmann durch entsprechende Versuche ermittelt werden.

In einer weiteren Ausführungsform ist vorgesehen, dass ein mit dem ersten Wasserkreislauf in Wirkverbindung stehendes Schmutzreservoir zur Aufnahme der von dem ersten Sieb abgelösten Verunreinigungen vorgesehen ist, wenn dieses in zweiter Richtung durchströmt wird. Das Schmutzreservoir dient zur zeitweiligen "Zwischenlagerung" der Verunreinigungen. Sobald die Verunreinigungen in dem Schmutzreservoir gelagert sind, sind diese außerhalb des ersten Wasserkreislaufs angeordnet, wodurch die Wirk-Effizienz der zur Reinigung eingesetzten Reinigungsmittel nicht beeinträchtigt werden kann. Darüber hinaus ermöglicht es das Vorsehen eines Schmutzreservoirs, das Spülflottenvolumen, welches zum Fördern der Verunreinigungen in das Schmutzreservoir benötigt wurde, für die weiteren Spülprogrammabschnitte rückzugewinnen.

Dazu ist es vorteilhaft, wenn gemäß einer weiteren Ausführungsform in dem Schmutzreservoir ein zweites Sieb angeordnet ist. Bevorzugt ist das zweite Sieb in dem Schmutzreservoir in vertikaler Orientierung angeordnet, so dass die Rückgewinnung der Spülflotte für die weiteren Spülprogramm-Abschnitte erleichtert wird. Die vertikale Orientierung verhindert wirkungsvoll, dass das zweite Sieb derart mit Verunreinigungen belegt werden kann, so dass ein weiterer Durchfluss von Spülflotte verhindert ist.

Bevorzugt ist das zweite Sieb als variables Sieb ausgebildet, das je nach Durchströmungsrichtung eine andere Maschenweite aufweist. Hierdurch kann ein Selbstreinigungseffekt des zweiten Siebs bereitgestellt werden.

In einer weiteren Ausführungsform ist das Schmutzreservoir in einem zweiten Wasserkreislauf der Geschirrspülmaschine angeordnet, so dass die in das Schmutzreservoir strömende Spülflotte, von Verunreinigungen befreit, über eine Einlassöffnung in den Spülbehälter oder in den Pumpentopf zurückführbar ist. Hierdurch lässt sich auf einfache Weise eine Geschirrspülmaschine bereitstellen, welche einen lediglich geringen Verbrauch an Wasser und Reinigungsmitteln zur Durchführung eines Spülzyklus aufweist.

Eine weitere Ausführungsform sieht vor, dass in dem Schmutzreservoir ein Sensor zur Bestimmung des Füllstandes in dem Schmutzreservoir vorgesehen ist, dessen Ausgangssignal einer Programmsteuereinheit zur Steuerung der Strömungsumkehr zuführbar ist. Der Sensor kann beispielsweise in Form eines Schwimmers ausgebildet sein. Der Sensor dient dazu, die Strömungsumkehr zu beenden, bevor das maximale Füllvolumen des Schmutzreservoirs, das mit dem Ablauf der Geschirrspülmaschine und einem Hauskanal-Anschluss in Wirkverbindung steht, erreicht ist.

Um die Strömungsrichtung durch das zweite Sieb in dem Schmutzreservoir beeinflussen zu können, ist es weiterhin vorteilhaft, wenn das Schmutzreservoir zumindest ein Stellglied aufweist. Durch die Wahl der Strömungsrichtung durch das zweite Sieb wird festgelegt, ob dieses eine Filterfunktion zur Zwischenlagerung der Verunreinigungen und Rückgewinnung der Spülflotte übernehmen soll, oder ob das zweite Sieb im Rahmen eines Abpumpvorganges der Spülflotte (z.B. nach Beendigung eines Spülprogrammabschnitts) im gleichen Moment einer Selbstreinigung unterworfen werden soll. Weiterhin kann durch das zumindest eine Stellglied festgelegt werden, ob die in dem Schmutzreservoir befindliche, von Verunreinigungen befreite, Spülflotte dem Wasserkreislauf der Geschirrspülmaschine zurückgeführt werden soll.

Zu diesem Zweck ist gemäß einer weiteren Ausgestaltung ein erstes Stellglied zum Verschließen der das Schmutzreservoir und den Spülbehälter verbindenden Einlassöffnung vorgesehen. Das zumindest eine Stellglied kann strömungsgesteuert oder aktuatorisch, z.B. durch einen Stellmotor, ein Memory-Metall oder ähnliches, zwischen einer Öffnungs- und einer Verschließ-Stellung, gegebenenfalls stufenlos, verstellt werden. Eine weitere Ausführungsform sieht vor, dass ein zweites Stellglied als Weiche vorgesehen ist, um die in das Schmutzreservoir geförderte Spülflotte wahlweise auf die eine oder die andere Seite des zweiten Siebs zu fördern. Die bestimmungsgemäße Funktion des zweiten Siebs in dem Schmutzreservoir lässt sich dabei durch koordiniertes Betätigen der vorgesehenen Stellglieder bewerkstelligen.

Eine weitere Ausführungsform der erfindungsgemäßen Geschirrspülmaschine umfasst eine veränderliche Maschenweite des ersten und/oder des zweiten Siebs durch einen Aktuator oder durch die Strömungsrichtung durch das betreffende Sieb. Ein besonders einfacher und kostengünstiger Aufbau ist dann gegeben, wenn die Maschenweite allein durch die Veränderung der Strömungsrichtung bewirkbar ist, da dann auf jegliche Ansteuermittel verzichtet werden kann. Hierdurch ist die Bereitstellung einer sehr kostengünstigen Geschirrspülmaschine möglich.

In einer weiteren Ausführungsform ist vorgesehen, dass an einem Ausgang des Pumpentopfes eine strömungs- oder aktuatorgesteuerte Verschlussklappe angeordnet ist, die in geschlossenem Zustand die wirksame Strömungsfläche auf ein vorgegebenes Maß verringert. Die Stellung der Verschlussklappe ist abhängig von der Strömungsrichtung der Spülflotte. Soll die Spülflotte in der ersten Richtung in dem im Wesentlichen geschlossenen Wasserkreislauf umgewälzt werden, so ist die Verschlussklappe geöffnet, so dass die in dem Pumpentopf befindliche Spülflotte der Pumpe zum weiteren Umwälzen ohne erhöhten Widerstand zuführbar ist. Wird die Spülflotte hingegen in zweiter Richtung zur Reinigung des ersten Siebs umgewälzt, so ist es vorteilhaft, wenn die Verschlussklappe den Ausgang des Pumpentopfes zumindest teilweise verschließt, so dass die gewünschte Zwangsdurchströmung des ersten Siebs sichergestellt ist. Je nach Ausgestaltung der Einrichtung zur Strömungsrichtungsumkehr könnte ansonsten die Situation auftreten, dass ein überproportional großer Anteil an Spülflotte aus dem Pumpentopf gefördert wird, welcher jedoch keinen Beitrag zur Entschmutzung des ersten Siebs liefern würde. Andererseits hat es sich als vorteilhaft herausgestellt, den Ausgang des Pumpentopfes nicht vollständig durch die Verschlussklappe zu schließen, um einen Leerlauf der Einrichtung zur Strömungsrichtungsumkehr zu verhindern, sobald die in dem ersten Wasserkreislauf befindliche Spülflotte in zweiter Richtung erschöpfend gefördert wurde. Das dabei zur Reinigung des ersten Siebs zur Verfügung stehende Wasservolumen entspricht im Wesentlichen dem in den Zuleitungen zu den Sprüheinrichtungen befindlichen Volumen.

Eine weitere Ausführungsform sieht vor, in dem Pumpentopf ein weiteres Sieb, insbesondere ein Grobsieb, anzuordnen, um Verunreinigungen einer gegebenen Größe am Eindringen in Richtung der Strömungserzeugenden Elemente zu hindern.

In einer weiteren Ausführungsform kann die Einrichtung zur Strömungsrichtungsumkehr durch die Pumpe gebildet sein. Die Strömungsrichtungsumkehr könnte durch eine veränderte Drehrichtung der Pumpe bewirkt sein. Je nach Ausgestaltung kann die Pumpe z.B. ein oder mehrere Flügelräder in einem Umwälzabschnitt sowie einem Entschmutzungsabschnitt der mit dem Pumpenausgang verbundenen Leitungen aufweisen. Alternativ kann die Einrichtung zur Strömungsrichtungsumkehr durch eine zweite Pumpe gebildet sein, wobei die im Umwälzabschnitt angeordnete (erste) Pumpe eine Umwälzpumpe und die im Entschmutzungsabschnitt angeordnete (zweite) Pumpe eine Entleerungspumpe herkömmlicher Art darstellen.

Eine besonders gute Säuberung des ersten Siebs ergibt sich dann, wenn die Einrichtung zur Strömungsrichtungsumkehr für eine verbesserte Entschmutzung des ersten Siebs, z.B. durch die Programmsteuereinheit, gepulst betreibbar ist.

In einer Ausführungsform des erfindungsgemäßen Verfahrens wird während des Umwälzens von Spülflotte durch das erste Sieb in der ersten Richtung die Verschmutzung des ersten Siebs ermittelt und bei Erreichen eines vorgegebenen Schwellwertes der Verschmutzung des ersten Siebs die Strömungsrichtungsumkehr durch das Filterelement bewirkt. Die Reinigung des ersten Siebs erfolgt gemäß dieser Ausführungsform unabhängig von dem im übrigen festgelegten Spülprogrämmabschnitten und kann daher zu jedem beliebigen Zeitpunkt vorgenommen werden.

Dabei ist, wie in Verbindung mit der erfindungsgemäßen Geschirrspülmaschine bereits beschrieben, weiter vorgesehen, dass der Strömungsquerschnitt durch das erste Sieb während der Strömungsrichtungsumkehr vergrößert wird, um eine effiziente Reinigung des ersten Siebs sicherzustellen.

Das Ermitteln der Verschmutzung des ersten Siebs kann sensorisch durch Überwachen der Drehzahl einer die Umwälzung bewirkenden Pumpe oder dem nahe der Pumpe vorherrschenden Druck (auf der Saug- oder Druckseite) der Spülflotte erfolgen.

Alternativ kann auch vorgesehen sein, dass das Durchführen der Strömungsrichturigsumkehr programmgesteuert zu vorgegebenen Zeitpunkten eines Spülprogrammablaufs erfolgt.

Eine weitere Ausgestaltung des erfindungsgemäßen Verfahrens sieht vor, dass die in zweiter Richtung geförderte Spülflotte durch ein zweites, in dem Schmutzreservoir angeordnetes Sieb gefördert wird. Wenn die durch das zweite Sieb in dem Schmutzreservoir geförderte Spülflotte, von Verunreinigungen befreit, der Geschirrspülmaschine wieder zugeführt wird, lässt sich ein Ressourcen sparendes Spülen vornehmen.

Die von Verunreinigungen befreite Spülflotte kann dem Spülbehälter über eine das Schmutzreservoir mit dem Spülbehälter verbindende Einlassöffnung oder in einer Ausgestaltung nach Abschalten der Strömungsumkehr über die einen Pumpentopf mit dem Schmutzreservoir verbindende Leitung in den Pumpentopf zurückgeführt werden.

Die Erfindung und deren Vorteile werden nachfolgend anhand der Zeichnungen näher erläutert. Es zeigen:

Figur 1 eine schematische Darstellung eines ersten Ausführungsbeispiels einer erfindungsgemäßen Geschirrspülmaschine,

Figur 2 eine schematische Darstellung eines zweiten Ausführungsbeispiels einer erfindungsgemäßen Geschirrspülmaschine,

Figur 3a) die Darstellung eines herkömmlichen Siebs mit fester Maschenweite,

Figuren 3b) bis 3g) verschiedene Ausführungsbeispiele variabler Siebe, und

Figur 4 eine durch eine einzige Pumpe ausgebildete Einrichtung zur Strömungsrichtungsumkehr.

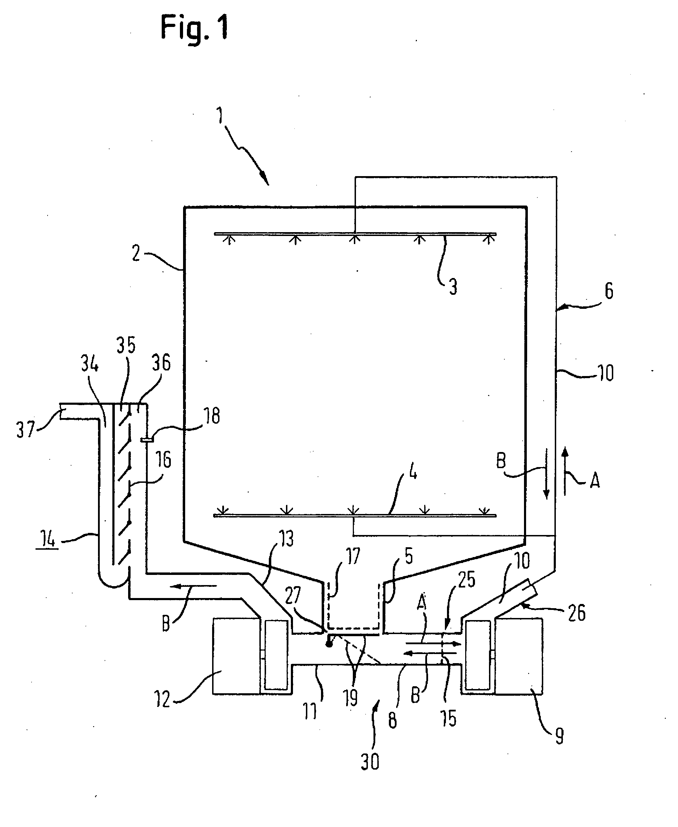

In Fig.1 ist ein erstes Ausführungsbeispiel einer Geschirrspülmaschine 1 in einer schematischen Ansicht dargestellt. Die Geschirrspülmaschine 1 umfasst im wesentlichen einen Spülbehälter 2, in dem nicht dargestelltes Spülgut angeordnet ist, einen Spülflotten- oder Wasserkreislauf 6, einen (in der Figur nicht näher dargestellten) Wasserzulauf und einen Ablauf 37. Das Spülgut ist in dem Spülbehälter 2 zwischen Wasch- oder Sprüharmen 3,4 angeordnet. Unterhalb des Spülgutes und der Sprüharme 3,4 ist eine Spülwanne angeordnet, welche im Spülbehälter 2 vorhandene Spülflotte in einen Pumpentopf 5 leitet. Der Pumpentopf 5 gehört zu dem Spülflottenkreislauf 6, in dem die für einen Spülvorgang benötigte Spülflotte umgewälzt wird.

Während eines Spülvorganges, der die durch eine Programmsteuereinheit gesteuerten Programmabschnitte Vorspülen, Reinigen, Zwischenspülen und Klarspülen umfassen kann, wird dem Pumpentopf 5 über eine Leitung 8 Spülflotte entnommen und über ein in der Leitung 8 angeordnetes erstes Sieb 15 zu einer Pumpe 9 geführt. Von der Pumpe 9 wird die Spülflotte nach Durchlaufen eines (nicht dargestellten) Durchlauferhitzers über eine Leitung 10 zu den Sprüharmen 3,4 geführt und von diesen in den Spülbehälter eingesprüht. Im Spülbehälter 2 läuft die Spülflotte dann über die Spülwanne wieder in den Pumpentopf 5. Während des Ablaufs eines Spülprogramms ergibt sich somit die mit dem Bezugszeichen A gekennzeichnete erste Strömungsrichtung der Spülflotte.

Das erste Sieb 15 ist direkt im Hauptstrom, in der vorliegenden Fig.1 in einem Saugbereich 25 der Pumpe 9 angeordnet. Entgegen der zeichnerischen Darstellung könnte das erste Sieb 15 auch in der Leitung 10 in einem Druckbereich 26 der Pumpe 9 angeordnet sein. Durch die räumliche Nähe des ersten Siebs 15 zu der Pumpe 9 ergibt sich ein mit Betrieb der Pumpe 9 erzwungenes Durchspülen des ersten Siebs 15. Hierdurch wird dieses, je nach Anschmutzung des Spülgutes, mit Verunreinigungen belegt und verringert die wirksame Querschnittsfläche. Dies führt zu einem sensorisch detektierbaren Druckabfall im Saug- bzw. Druckbereich 25,26 der Pumpe 9. Gleichzeitig steigt in geringem Maße die Drehzahl des Motors der Pumpe 9, da dieser aufgrund des verminderten Fördervolumenstromes in einen anderen Arbeitspunkt auf einer p-Q-Pumpen-Kennlinie gelangt. Der Drehzahlabfall ist ebenfalls durch bekannte Sensoren detektierbar.

Diese beiden Parameter - ein veränderter Druck im Saug- oder Druckbereich 25, 26 der Pumpe 9 und/oder eine veränderte Drehzahl der Pumpe 9 - oder alternativ oder zusätzlich ein überwachter Füllstand im Pumpentopf 5 können als Sensorgrößen herangezogen werden, um die Belegung des ersten Siebs 15 mit Verunreinigungen zu überwachen. Hierzu können, beispielsweise in der (in der Figur nicht dargestellten) Programmsteuereinheit Grenzwerte für die jeweiligen Parameter festgelegt werden und ein Über- oder Unterschreiten eines Grenzwertes überwacht werden.

Ist dieses Kriterium erfüllt, so wird eine Strömungsrichtungsumkehr der Spülflotte eingeleitet. Dazu wird im Ausführungsbeispiel gemäß Fig.1 die Pumpe 9 abgeschaltet und eine über eine Leitung 11 mit dem Pumpentopf 5 verbundene Pumpe 12 eingeschaltet, die durch eine herkömmliche Entleerungspumpe gebildet sein kann. Durch deren Betrieb ergibt sich in dem Spülflottenkreislauf 6 eine zweite, mit dem Bezugszeichen B gekennzeichnete, Strömungsrichtung der Spülflotte. Durch den Betrieb der Pumpe 12 werden die an dem ersten Sieb 15 angelagerten und dem Pumpentopf 5 zugewandten Verunreinigungen abgesaugt, wodurch eine Reinigung bewirkt ist.

Um zu vermeiden, dass durch den durch die Pumpe 12 erzeugten Sog in dem Pumpentopf 5 befindliche Spülflotte anstelle der in dem ersten Spülflottenkreislauf 6 befindlichen Spülflotte angesaugt wird, ist an einem Ausgang 27 des Pumpentopfes 5 eine Verschlussklappe 19 angeordnet, die bei Strömungsrichtungsumkehr die mit der geschlossenen Linie gezeigte und ansonsten die mit der druchbrochenen Linie dargestellte Stellung einnimmt. Prinzipiell kann die Verschlussklappe 19 den Ausgang 27 des Pumpentopfes 5 vollständig verschließen, so dass von diesem keine Spülflotte in die Leitung 11 gesogen werden kann. Es hat sich als vorteilhaft herausgestellt, den Ausgang 27 des Pumpentopfes 5 jedoch lediglich nur zum Teil zu verschließen, so dass der Strömungswiderstand vom Pumpentopf in Richtung Leitung 11 stark erhöht ist. Ist nämlich die in dem Spülflottenkreislauf 6 (das heißt in den Sprüharmen und in den Leitungen bis zur Pumpe 12) befindliche Spülflotte vollständig leergesaugt, so kann in dem Pumpentopf 5 befindliche Spülflotte in die Leitung 11 nachfließen, so dass ein Leerlaufen der Pumpe 12 vermieden ist.

Die durch die Pumpe 12 angesaugte Spülflotte inklusive der in den Leitungen 8 und 11 sowie an dem ersten Sieb 15 angelagerten Verunreinigungen wird über eine Leitung 13 in ein Schmutzreservoir 14 geleitet.

Das Schmutzreservoir 14 umfasst ein zweites Sieb 16 und ist mit dem Ablauf 37 verbunden. Das zweite Sieb 16 ist in der Figur beispielhaft mit Klappen versehen, so dass die Verunreinigungen bei geringem Strömungswiderstand in Richtung des Ablaufs gedrückt werden. Da das Schmutzreservoir 14 im vorliegenden Beispiel nach dem Prinzip kommunizierender Röhren aufgebaut ist, ergibt sich in sämtlichen drei Teilabschnitten 34,35,36 ein gleicher Wasserstand, der durch einen Sensor 18 (z.B. ein Schwimmer) überwacht werden kann. Mit Erreichen des Sensor-Niveaus wird die Pumpe 12 abgeschaltet, wodurch ein entgegen der Schwerkraft wirkender Druck in der Leitung 13 abgebaut wird. Hierdurch bedingt schließen sich die Klappen des zweiten Siebs 16, so dass die in der Figur in den Schmutzreservoirabschnitten 34,35 befindlichen Verunreinigungen in dem Schmutzreservoir 14 gehalten werden. Aufgrund gezielter Undichtigkeiten an den Klappen oder einen entsprechenden Anlageabschnitt jeweiliger Klappen strömt die Spülflotte über den Schmutzreservoirabschnitt 36, die Leitung 13 und die Leitung 11 zurück in Richtung des Wasserkreislaufs 6. Dabei weist die Spülflotte jedoch einen hohen Reinigungsgrad auf. Auf diese Weise ist eine Rückgewinnung der Spülflotte bereitgestellt, wodurch lediglich geringe Mengen an Wasser für den weiteren Spülprogrammablauf zugeführt werden müssen.

Wird die Pumpe 12 dauerhaft betrieben, das heißt unter Missachtung des von dem Sensor 18 gelieferten Signals, so wird das im Schmutzreservoir befindliche Wasser zusammen mit den Verunreinigungen in den Ablauf 37 gepumpt.

Damit ist ein Regelkreislauf geschaffen, der erkennt, wann das erste Sieb 15 im Spülflottenkreislauf 6 mit Verunreinigungen belegt ist und es wird eine selbsttätige Reinigung des ersten Siebs und der Abtransport des Schmutzes angestoßen. Dieser Kreislauf wird je nach Verschmutzungsgrad und Menge der Anschmutzung an dem ersten Sieb angestoßen. Dies bedeutet, dass das erste Sieb bei höherem Befall an Schmutz häufiger selbsttätig gereinigt wird.

Da Verunreinigungen - je nach Sensibilität der Verunreinigungserkennung des ersten Siebs 15 - frühzeitig dem ersten Spülflottenkreislauf 6 entzogen werden, ist ein Betrieb der Geschirrspülmaschine 1 mit einer geringeren Menge an Reinigungsmitteln möglich, da deren Wirksamkeit durch im Wasserkreislauf befindliche Verschmutzung nicht beeinträchtigt wird. Ein weiterer Vorteil der erfindungsgemäßen Anordnung des ersten Siebs 15 besteht darin, dass der Pumpentopf 5 kleiner gebaut werden kann, wodurch die Totwassermenge reduziert wird. Auf eine herkömmliche Filteranordnung im Bereich des Spülbehälterbodens sowie dem Pumpentopf kann im wesentlichen verzichtet werden, wobei es vorteilhaft ist, wenn - wie in Fig.1 eingezeichnet - ein zweites Sieb 17 in Form eines Grobsiebs in dem Pumpentopf 5 vorgesehen ist, um grobe Verunreinigungen von dem ersten Sieb 15 fernzuhalten. Aufgrund der Zwangsdurchströmung des ersten Siebs 15 kann dieses verglichen mit herkömmlichen Filteranordnungen wesentlich kleiner ausgeführt werden. Weiterhin ergibt sich eine Wasserreduzierung, da eine Schmutzerkennung integriert ist und die Verunreinigungen ohne die Notwendigkeit einen vollständigen Wasserwechsel durchzuführen, abtransportiert werden.

Anstelle eines Schwimmers kann in dem Schmutzreservoir 14 die Funktion der Niveau-Regulierung ein Überlauf übernehmen. Dieser kann nach Art eines Absetzbecken gestaltet sein, so dass auch hier eine Schmutz-Separatisierung gewährleistet wird. In dieser Variante kann auch ein Schaumfilter zur Unterstützung der Filterung eingesetzt werden.

In einer anderen Ausgestaltung ist es auch möglich, dass die Selbstreinigung des ersten Siebs 15, das heißt eine Strömungsrichtungsumkehr (in die zweite Richtung B) an den Ablauf des gerade ablaufenden Spülprogramms gekoppelt ist, so dass bei jedem Spülzyklus zumindest eine Selbstreinigung des ersten Siebs 15 durchgeführt wird.

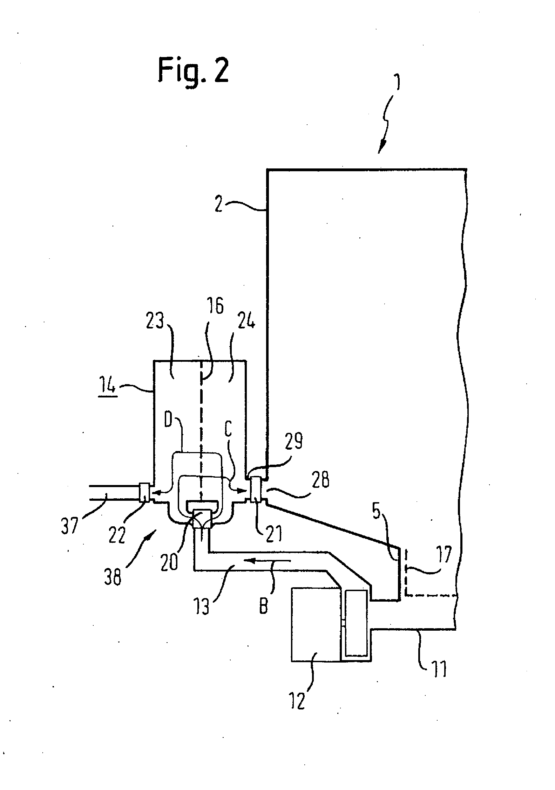

Fig.2 zeigt ein zweites Ausführungsbeispiel einer erfindungsgemäßen Geschirrspülmaschine, welche sich im Aufbau und im Anschluss des Schmutzreservoirs 14 vom ersten Ausführungsbeispiel unterscheidet. Das Schmutzreservoir 14 ist über eine ein Stellglied 20 aufweisende Wasserweiche 38 mit der Leitung 13 verbunden. Über die Wasserweiche 38 kann von der Pumpe 12 in der Leitung 13 in Strömungsrichtung B geförderte Spülflotte wahlweise in ein Schmutzreservoirvolumen 23 oder ein Schmutzreservoirvolumen 24 des Schmutzreservoirs 14 geführt werden. Das Schmutzreservoirvolumen 23 ist über ein Stellglied 22 mit dem Ablauf 37 verbunden. Das Schmutzreservoirvolumen 24 ist über ein Stellglied 21 in einer Leitung 29 mit einer Einlassöffnung 28 des Spülbehälters 2 verbunden. Sämtliche Stellglieder 20, 21, 22 sind durch die Programmsteuereinheit der Geschirrspülmaschine 1 ansteuerbar.

Während des Betriebs der Geschirrspülmaschine 1 in Strömungsumkehrrichtung wird die Spülflotte durch entsprechende Stellung des Stellglieds 20 in das Schmutzreservoirvolumen 23 gefördert. Das Stellglied 22 verschließt den Zugang zu dem Ablauf 37, während das Stellglied 21 geöffnet ist. Hierdurch wird die mit Verunreinigungen versehene Spülflotte an dem Sieb 16 gereinigt und kann über das Schmutzreservoirvolumen 24 und die Einlassöffnung 28 zurück in den Spülbehälter 2 fließen. Sollen die in dem Schmutzreservoirvolumen 23 angesammelten Verunreinigungen aus dem Schmutzreservoir 14 entfernt werden, so wird die Spülflotte bei geschlossenem Stellglied 21 in das Schmutzreservoirvolumen 24 geleitet. Bei gleichzeitiger Öffnung des Stellglieds 22 wird die Spülflotte, zusammen mit den im Schmutzreservoirvolumen 23 befindlichen Verunreinigungen in den Ablauf 37 und in einen nicht dargestellten Hausablauf gepumpt. Auf diese Weise ist eine Selbstreinigung des Siebs 16 sichergestellt.

Um eine hohe Effizienz des ersten und/oder zweiten Siebs 15, 16 zu erzielen, ist es vorteilhaft, wenn diese als variable Siebe ausgeführt sind. Wird die Geschirrspülmaschine regulär betrieben, das heißt, wird die Spülflotte in erster Richtung A durch das erste Sieb 15 gefördert, so ist eine möglichst gute Filterung der Spülflotte erwünscht. Das erste Sieb 15 ist deshalb in dieser Richtung bevorzugt als Mikrosieb ausgebildet. Eine Reinigung wird jedoch erleichtert, wenn das erste Sieb 15 in zweiter Strömungsrichtung B eine andere, größere Maschenweite aufweist. Entsprechendes gilt für das zweite Sieb 16, wobei in Strömungsrichtung C eine hohe Filterwirkung aufgrund kleiner Maschenweite und in Strömungsrichtung D eine größere Maschenweite für eine hohe Selbstreinigungswirkung erwünscht ist.

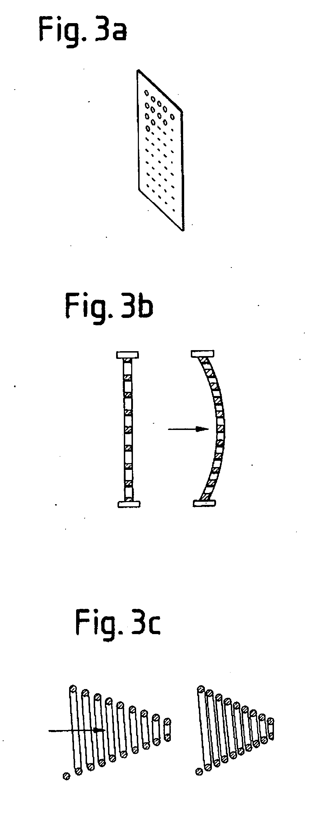

In den Fig. 3b) bis 3g) sind verschiedene Ausführungsbeispiele variabler Siebe dargestellt, die als Sieb 15 und 16 in der vorliegenden Erfindung Einsatz finden können. In Fig.3a) ist das Sieb zum Vergleich als ein Sieb mit definierten Öffnungen ausgeführt. Dabei können sich Schmutzpartikel an den Öffnungen festsetzen und werden schlecht entfernt.

Fig.3b) zeigt ein flexibles Sieb, das aufgrund einer definierten Wandstärke und bei einem gegebenen Strömungswiderstand biegsam ausgebildet ist. Hierdurch verändert sich die Lochgeometrie und damit die Maschenweite. Im durchgebogenen Zustand weist das Sieb deshalb eine geringere Maschenweite und damit eine verbesserte Filterung auf.

Das Sieb gemäß Fig.3c) ist als kegelförmiger Federkörper aus gewickelten Drahtwindungen ausgebildet. Der Abstand benachbarter Windungsabschnitte verändert sich aufgrund des Strömungswiderstandes. Je nach Strömungsrichtung wird damit eine verbesserte oder verringerte Filterung bereitgestellt. Der Draht des Federkörpers könnte auch aus einem Welldraht ausgebildet sein, um eine Grundöffnung zu erhalten, wenn die Windungsabschnitte aufgrund der Strömungsrichtung aneinander gepresst werden.

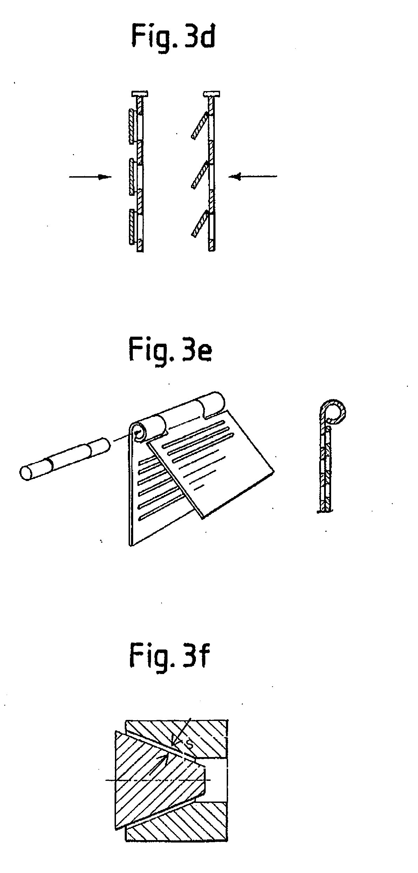

Eine besonders einfache Ausführungsform eines variablen Siebs ist in Fig.3d) dargestellt. An einem Grundkörper ist eine Mehrzahl an Klappen angeordnet, die sich je nach Strömungsrichtung verschließen oder öffnen. Die Klappen können seitlich kleine Stege aufweisen, um eine Grundöffnung sicherzustellen. Die Klappen selbst können auch mit Durchbrüchen kleineren Durchmessers versehen sein, so dass eine erwünschte Grundöffnung sichergestellt ist.

Eine ähnliche Ausführungsform zeigt Fig.3e), bei der eine Klappe mit beispielhaft ausgebildeten Längsschlitzen über einer Platte mit Längs- oder Querschlitzen angeordnet ist. Das Öffnen und Schließen der Klappe erfolgt durch die jeweilige Strömungsrichtung, wobei je nach Stellung der Klappe der Querschnitt variiert. Über verstellbare Nocken könnte zusätzlich die Grundgröße der Sieböffnungen verstellt werden.

In der Ausführungsform gemäß Fig.3f) wird ein Kegel in ein korrespondierend ausgestaltetes Gegenstück geführt. Je nach Stellung des Kegels zu dem Gegenstück kann der Öffnungsspalt s variiert werden. Hiermit kann über einen verstellbaren Weg eine gezielte freie Öffnung eingestellt werden. Die Randzone des Kegels oder des Gegenstücks kann mit kleinen Stegen oder dergleichen versehen sein, um eine Grundöffnung zu garantieren. Die Betätigung des Kegels relativ zu dem Gegenstück kann über einen beliebigen Aktuator oder ein Memory-Metall realisiert sein.

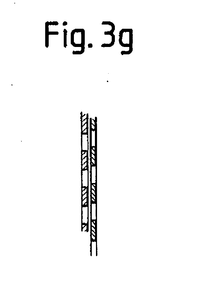

Fig.3g) zeigt zwei Siebplatten mit jeweiligen Öffnungen. Durch Gegeneinanderbewegen wird der wirksame Querschnitt variiert. Die Betätigung kann ebenfalls über einen beliebig ausgestalteten Aktuator oder ein Memory-Metall erfolgen.

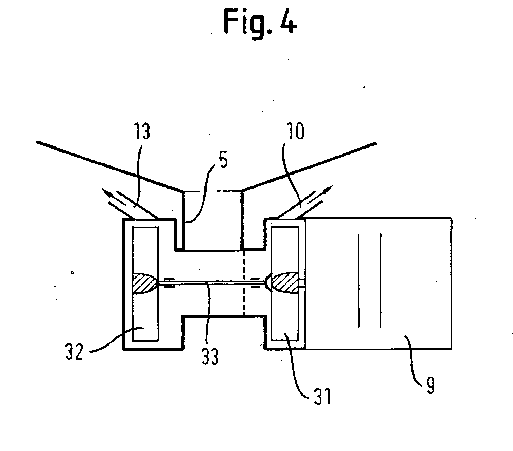

In den Ausführungsbeispielen gemäß den Fig.1 und 2 sind Geschirrspülmaschinen dargestellt, bei denen die Einrichtung 30 zur Strömungsrichtungsumkehr durch eine Umwälzpumpe 9 und eine Entleerungspumpe 12 gebildet sind. In einer anderen Ausführungsform, die schematisch in Fig.4 dargestellt ist, ist die Einrichtung zur Strömungsrichtungsumkehr durch lediglich eine einzige Pumpe 9 möglich. An einer durch einen Motor angetriebenen Welle 33 sind zwei Flügelräder 31,32 montiert, die in räumlicher Nähe zur Leitung 10 bzw. 13 angeordnet sind. Der Motor der Pumpe 9 ist in seiner Drehrichtung umkehrbar. Die beiden Flügelräder sind jeweils über einen Freilauf (in der Figur nicht näher dargestellt) mit der Welle 33 verbunden, so dass das Flügelrad 31 von der Welle 33 mitgenommen wird, wenn sich der Motor in einer Richtung bewegt, während das andere Flügelrad 32 unbewegt bleibt. Bei Drehrichtungs-Umkehr des Motors wird hingegen das Flügelrad 32 durch die Welle 33 mitgenommen, während das Flügelrad 31 stillsteht.

Neben einem Freilauf kann das Mitnehmen des jeweiligen Flügelrades durch einen Aktuator, einen Memory-Metall, einen Magnet oder motorisch bewerkstelligt werden. In dieser Ausführung ist es zweckmäßig, den Motor stärker auszuführen, so dass kleine Festkörper, wie z.B. Zahnstocher und dergleichen mittels eines kräftig ausgeführten Flügelrades 32 oder ein spezielles, z.B. ebenfalls an der Welle befestigtes Messer, zerkleinert werden, ohne dass der Entleerungsvorgang in Richtung der Leitung 13 zum Blockieren kommt.

### Bezugszeichenliste

- 1: Geschirrspülmaschine

- 2: Spülbehälter / Spülraum

- 3: Sprüharm

- 4: Sprüharm

- 5: Pumpentopf

- 6: Spülflottenkreislauf

- 7: Spülflotte / Spülflüssigkeit

- 8: Leitung

- 9: Pumpe (Umwälzpumpe)

- 10: Leitung

- 11: Leitung

- 12: Pumpe (Entleerungspumpe)

- 13: Leitung

- 14: Schmutzreservoir

- 15: Sieb

- 16: Sieb

- 17: Sieb

- 18: Sensor

- 19: Verschlussklappe

- 20: Stellglied

- 21: Stellglied

- 22: Stellglied

- 23: Sctimutzreservoirvolumen

- 24: Schmutzreservoirvolumen

- 25: Saugbereich

- 26: Druckbereich

- 27: Ausgang des Pumpentopfs

- 28: Einlassöffnung

- 29: Leitung

- 30: Einrichtung zur Strömungsrichtungsumkehr

- 31: Flügelrad

- 32: Flügelrad

- 33: Welle

- 34: Schmutzreservoirabschnitt

- 35: Schmutzreservoirabschnitt

- 36: Schmutzreservoirabschnitt

- 37: Ablauf

- 38: Wasserweiche

- A: Strömungsrichtung der Spülflotte

- B: Strömungsrichtung der Spülflotte

- C: Strömungsrichtung der Spülflotte

- D: Strömungsrichtung der Spülflotte

## Patentansprüche

1. Geschirrspülmaschine, insbesondere Haushalt-Geschirrspülmaschine, mit wenigstens einem im Wesentlichen geschlossenen Wasserkreislauf, in dem Spülflotte nach Maßgabe einer Programmsteuereinheit in einer ersten Richtung umgewälzt wird, wobei die Spülflotte beim Umwälzen zur Filterung von Verunreinigungen durch ein Filterelement gefördert wird, **dadurch gekennzeichnet, dass**
- eine Einrichtung (30) zur Strömungsrichtungsumkehr vorgesehen ist, durch welche ein Umwälzen der Spülflotte in einer zweiten, der ersten Richtung (A) entgegen gesetzten, Richtung (B) zum Durchströmen und Beseitigen von Verunreinigungen eines ersten Siebs (15) ermöglicht wird, und
- das erste Sieb (15) derart in dem Wasserkreislauf (6) angeordnet ist, dass dieses beim Umwälzen der Spülflotte sowohl in der ersten als auch in der zweiten Richtung (B) zwangsdurchströmbar ist.

2. Geschirrspülmaschine nach Anspruch 1, **dadurch gekennzeichnet, dass** das erste Sieb (15) in einer einen Pumpentopf (5) und einer Pumpe (9) verbindenden Leitung (8) im Saugbereich (25) der Pumpe (9) angeordnet ist.

3. Geschirrspülmaschine nach Anspruch 1, **dadurch gekennzeichnet, dass** das erste Sieb (15) in einer die Pumpe (9) und Sprüheinrichtungen (3,4) verbindenden Leitung (10) im Druckbereich (26) der Pumpe (9) angeordnet ist.

4. Geschirrspülmaschine nach einem der vorherigen Ansprüche, **dadurch gekennzeichnet, dass** das erste Sieb (15) als variables Sieb ausgebildet ist, das beim Umwälzen der Spülflotte in der ersten Richtung (A) eine andere Maschenweite als beim Umwälzen der Spülflotte in der zweiten Richtung (B) aufweist.

5. Geschirrspülmaschine nach Anspruch 4, **dadurch gekenntzeichnet, dass** das Sieb (15) beim Umwälzen der Spülflotte in der ersten Richtung (A) als Mikrosieb ausgebildet ist.

6. Geschirrspülmaschine nach einem der vorherigen Ansprüche, **dadurch gekennzeichnet, dass** die Belegung des ersten Siebs (15) mit Verunreinigungen sensorisch ermittelt wird, um bei Überschreiten eines vorgegebenen Parameter-Grenzwerts eine Strömungsrichtungsumkehr zu veranlassen.

7. Geschirrspülmaschine nach Anspruch 6, **dadurch gekennzeichnet, dass** als Parameter zur Überwachung der Belegung des ersten Siebs (15) der im Saug- und/oder Druckbereich (25,26) der Pumpe (9) herrschende Druck herangezogen wird.

8. Geschirrspülmaschine nach Anspruch 6 oder 7, **dadurch gekennzeichnet, dass** als Parameter zur Überwachung der Belegung des ersten Siebs (15) die Drehzahl der Pumpe (9) herangezogen wird.

9. Geschirrspülmaschine nach einem der vorherigen Ansprüche, **dadurch gekennzeichnet, dass** ein mit dem ersten Wasserkreislauf (6) in Wirkverbindung stehendes Schmutzreservoir (14) zur Aufnahme der von dem ersten Sieb (15) abgelösten Verunreinigungen, wenn dieses in zweiter Richtung (B) durchströmt wird, vorgesehen ist.

10. Geschirrspülmaschine nach Anspruch 9, **dadurch gekennzeichnet, dass** in dem Schmutzreservoir (14) ein zweites Sieb (16) angeordnet ist.

11. Geschirrspülmaschine nach einem der vorherigen Ansprüche, **dadurch gekennzeichnet, dass** das zweite Sieb (16) in dem Schmutzreservoir (14) in vertikaler Orientierung angeordnet ist.

12. Geschirrspülmaschine nach Anspruch 10 oder 11, **dadurch gekennzeichnet, dass** das zweite Sieb (16) als variables Sieb ausgebildet ist, das je nach Durchströmungsrichtung (C,D) eine andere Maschenweite aufweist.

13. Geschirrspülmaschine nach einem der Ansprüche 9 bis 12, **dadurch gekennzeichnet, dass** das Schmutzreservoir (14) in einem zweiten Wasserkreislauf der Geschirrspülmaschine (1) angeordnet ist, so dass die in das Schmutzreservoir (14) strömende Spülflotte, von Verunreinigungen befreit, über eine Einlassöffnung (28) in den Spülbehälter (2) oder in den Pumpentopf (5) zurückführbar ist.

14. Geschirrspülmaschine nach einem der Ansprüche 9 bis 13, **dadurch gekennzeichnet, dass** in dem Schmutzreservoir (14) ein Sensor (18) zur Bestimmung des Füllstands in dem Schmutzreservoir (14) vorgesehen ist, dessen Ausgangssignal einer Programmsteuereinheit zur Steuerung der Strömungsumkehr zuführbar ist.

15. Geschirrspülmaschine nach einem der Ansprüche 9 bis 14, **dadurch gekennzeichnet, dass** das Schmutzreservoir (14) zumindest ein Stellglied (20, 21, 22) aufweist zur Beeinflussung der Strömungsrichtung durch das zweite Sieb (16).

16. Geschirrspülmaschine nach Anspruch 15, **dadurch gekennzeichnet, dass** ein erstes Stellglied (21) zum Verschließen der das Schmutzreservoir (14) und den Spülbehälter (2) verbindenden Einlassöffnung vorgesehen ist.

17. Geschirrspülmaschine nach Anspruch 15 oder 16, **dadurch gekennzeichnet, dass** ein zweites Stellglied (20) als Weiche vorgesehen ist, um die in das Schmutzreservoir (14) geförderte Spülflotte wahlweise auf die eine oder die andere Seite des zweiten Siebs (16) zu fördern.

18. Geschirrspülmaschine nach einem der vorherigen Ansprüche, **dadurch gekennzeichnet, dass** die Maschenweite des ersten und/oder des zweiten Siebs (15,16) durch einen Aktuator oder durch die Strömungsrichtung durch das betreffende Sieb (15,16) veränderbar ist.

19. Geschirrspülmaschine nach einem der vorherigen Ansprüche, **dadurch gekennzeichnet, dass** an einem Ausgang (27) des Pumpentopfs (5) eine strömungs- oder Aktuator gesteuerte Verschlussklappe (19) angeordnet ist, die im geschlossenen Zustand die wirksame Strömungsfläche auf ein vorgegebenes Maß verringert.

20. Geschirrspülmaschine nach einem der vorherigen Ansprüche, **dadurch gekennzeichnet, dass** in dem Pumpentopf (5) ein weiteres Sieb (17) angeordnet ist.

21. Geschirrspülmaschine nach einem der vorherigen Ansprüche, **dadurch gekennzeichnet, dass** die Einrichtung (30) zur Strömungsrichtungsumkehr durch die Pumpe (9) gebildet ist.

22. Geschirrspülmaschine nach einem der vorherigen Ansprüche, **dadurch gekennzeichnet, dass** die Einrichtung (30) zur Strömungsrichtungsumkehr durch eine zweite Pumpe (12) gebildet ist.

23. Geschirrspülmaschine nach einem der vorherigen Ansprüche, **dadurch gekennzeichnet, dass** die Einrichtung (30) zur Strömungsrichtungsumkehr für eine verbesserte Entschmutzung des ersten Siebs (15) gepulst betreibbar ist.

24. Verfahren zum Betreiben einer Geschirrspülmaschine, insbesondere einer Haushalt-Geschirrspülmaschine, bei dem in einem im Wesentlichen geschlossenen Wasserkreislauf Spülflotte nach Maßgabe einer Programmsteuereinheit in einer ersten Richtung umgewälzt und zur Filterung von Verunreinigungen durch ein Filterelement gefördert wird, **dadurch gekennzeichnet, dass** zur Reinigung eines ersten Siebs (15) eine Strömungsrichtungsumkehr der Spülflotte durch das erste Sieb (15) bewirkt wird, so dass die Spülflotte in einer zweiten, der ersten Richtung (A) entgegen gesetzten, Richtung (B) durch das erste Sieb (15) gefördert wird

25. Verfahren nach Anspruch 24, **dadurch gekennzeichnet, dass**
- während des Umwälzens von Spülflotte durch das erste Sieb (15) in einer ersten Richtung (A) die Verschmutzung des ersten Siebs (15) ermittelt wird, und
- bei Erreichen eines vorgegebenen Schwellwerts der Verschmutzung des ersten Siebs (15) die Strömungsrichtungsumkehr durch das erste Sieb (15) bewirkt wird.

26. Verfahren nach Anspruch 24 oder 25, **dadurch gekennzeichnet, dass** das Ermitteln der Verschmutzung des Filterelements sensorisch durch Überwachen der Drehzahl einer die Umwälzung bewirkenden Pumpe (9) oder dem nahe der Pumpe (9) vorherrschenden Drucks der Spülflotte erfolgt.

27. Verfahren nach Anspruch 24, **dadurch gekennzeichnet, dass** das Durchführen der Strömungsrichtungsumkehr programmgesteuert zu vorgegebenen Zeitpunkten eines Spülprogrammablaufs erfolgt.

28. Verfahren nach einem der Ansprüche 24 bis 27, **dadurch gekennzeichnet, dass** der Strömungsquerschnitt durch das erste Sieb (15) während der Strömungsrichtungsumkehr vergrößert wird.

29. Verfahren nach einem der Ansprüche 24 bis 27, **dadurch gekennzeichnet, dass** die in zweiter Richtung (B) geförderte Spülflotte durch ein zweites, in einem Schmutzreservoir (14) angeordnetes, Sieb (16) gefördert wird.

30. Verfahren nach Anspruch 29, **dadurch gekennzeichnet, dass** die durch das zweite Sieb (16) in dem Schmutzreservoir (14) geförderte Spülflotte, von Verunreinigungen befreit, der Geschirrspülmaschine (1) wieder zugeführt wird.

31. Verfahren nach Anspruch 30, **dadurch gekennzeichnet, dass** die von Verunreinigungen befreite Spülflotte dem Spülbehälter (2) über eine das Schmutzreservoir (14) mit dem Spülbehälter (2) verbindende Einlassöffnung (28) zugeführt wird.

32. Verfahren nach Anspruch 30, **dadurch gekennzeichnet, dass** die von Verunreinigungen befreite Spülflotte nach Abschalten der Strömungsumkehr über die einen Pumpentopf (5) mit dem Schmutzreservoir (14) verbindende Leitung (13,11) in den Pumpentopf (5) zurückgeführt wird.

## Claims

1. Dishwasher, particularly household dishwasher, with at least one substantially closed water circuit in which rinsing solution is circulated in a first direction according to a program control unit, wherein during circulation the rinsing solution is conveyed through a filter element for the filtering of contaminants, **characterised in that**
- a device (30) for flow direction reversal is provided, by which circulation of the rinsing solution in a second direction (B) opposite to the first direction (A) is made possible for flowing through and removal of contaminants from a first filter (15) and
- the first filter (15) is so arranged in the water circuit (6) that during circulation of the rinsing solution there can be constrained flow therethrough not only in the first, but also in the second direction (B).

2. Dishwasher according to claim 1, **characterised in that** the first filter (15) is arranged in a duct (8), which connects a pump pot (5) and a pump (9), in the suction region (25) of the pump (9).

3. Dishwasher according to claim 1, **characterised in that** the first filter (15) is arranged in a duct (10), which connects the pump (9) and spray devices (3, 4), in the pressure region (26) of the pump (9).

4. Dishwasher according to any one of the preceding claims, **characterised in that** the first filter (15) is constructed as a variable filter which during circulation of the rinsing solution in the first direction (A) has a different mesh aperture size than during circulation of the rinsing solution in the second direction (B).

5. Dishwasher according to claim 4, **characterised in that** the filter (15) during circulation of the rinsing solution in the first direction (A) is constructed as a microfilter.

6. Dishwasher according to any one of the preceding claims, **characterised in that** the filling of the first filter (15) with contaminants is detected by sensor in order to produce a flow direction reversal in the case of exceeding of a predetermined parameter limit value.

7. Dishwasher according to claim 6, **characterised in that** the pressure prevailing in the suction and/or pressure region (25, 26) of the pump (9) is utilised as parameter for monitoring the filling of the first filter (15).

8. Dishwasher according to claim 6 or 7, **characterised in that** the rotational speed of the pump (9) is utilised as parameter for monitoring the filling of the first filter (15).

9. Dishwasher according to any one of the preceding claims, **characterised in that** a dirt reservoir (14), which is disposed in operative connection with the first water circuit (6), for reception of contaminants, which are detached from the first filter (15) when this is flowed through in second direction (B), is provided.

10. Dishwasher according to claim 9, **characterised in that** a second filter (16) is arranged in the dirt reservoir (14).

11. Dishwasher according to any one of the preceding claims, **characterised in that** the second filter (16) is arranged in the dirt reservoir (14) in vertical orientation.

12. Dishwasher according to claim 10 or 11, **characterised in that** the filter (16) is constructed as a variable filter which has a different mesh aperture size depending on the respective throughflow direction (C, D).

13. Dishwasher according to any one of claims 9 to 12, **characterised in that** the dirt reservoir (14) is arranged in a second water circuit of the dishwasher (1) so that the rinsing solution, freed of contaminants, flowing into the dirt reservoir (14) can be fed back to the rinsing container (2) or the pump pot (5) by way of an inlet opening (28).

14. Dishwasher according to any one of claims 9 to 13, **characterised in that** a sensor (18), the output signal of which can be fed to a program control unit for controlling the flow reversal, for determination of the filling state in the dirt reservoir (14) is provided in the dirt reservoir (14).

15. Dishwasher according to any one of claims 9 to 14, **characterised in that** the dirt reservoir (14) comprises at least one setting element (20, 21, 22) for influencing the flow direction through the second filter (16).

16. Dishwasher according to claim 15, **characterised in that** a first setting element (21) for closing the inlet opening connecting the dirt reservoir (14) and the rinsing container (2) is provided.

17. Dishwasher according to claim 15 or 16, **characterised in that** a second setting element (20) is provided as a switch in order to convey the rinsing solution, which is conveyed into the dirt reservoir (14), selectably onto one or the other side of the second filter (16).

18. Dishwasher according to any one of the preceding claims, **characterised in that** the mesh aperture size of the first and/or second filter (15, 16) is variable by an actuator or by the flow direction through the filter (15, 16) concerned.

19. Dishwasher according to any one of the preceding claims, **characterised in that** a flow-controlled or actuator-controlled closure flap (19), which in the closed state reduces the effective flow area to a predetermined size, is arranged at outlet (27) of the pump pot (5).

20. Dishwasher according to any one of the preceding claims, **characterised in that** a further filter (17) is arranged in the pump pot (5).

21. Dishwasher according to any one of the preceding claims, **characterised in that** the device (30) for flow direction reversal is formed by the pump (9).

22. Dishwasher according to any one of the preceding claims, **characterised in that** the device (30) for flow direction reversal is formed by a second pump (12).

23. Dishwasher according to any one of the preceding claims, **characterised in that** the device (30) for flow direction reversal is operable in pulsed manner for improved removal of dirt from the first filter (15).

24. Method of operating a dishwasher, particularly a household dishwasher, in which rinsing liquid is circulated in a first direction in a substantially closed water circuit according to a program control unit and is conveyed through a filter element for the filtering of contaminants, **characterised in that** for cleaning a first filter (15) a flow direction reversal of the rinsing solution through the first filter (15) is produced so that the rinsing solution is conveyed through the first filter (15) in a second direction (B) opposite to the first direction (A).

25. Method according to claim 24, **characterised in that**
- during the circulation of rinsing solution through the first filter (15) in a first direction (A) the degree of contamination of the first filter (15) is detected and
- on attainment of a predetermined threshold value of contamination of the first filter (15) the flow direction reversal through the first filter (15) is produced.

26. Method according to claim 24 or 25, **characterised in that** the detection of the contamination of the filter element is carried out by sensor by monitoring the rotational speed of a pump (9), which produces circulation, or the pressure of the rinsing solution prevailing near the pump (9).

27. Method according to claim 24, **characterised in that** performance of the flow direction reversal takes place in program-controlled manner at predetermined points in time of a rinsing program sequence.

28. Method according to any one of claims 24 to 27, **characterised in that** the flow cross-section through the first filter (15) is enlarged during the flow direction reversal.

29. Method according to any one of claims 24 to 27, **characterised in that** the rinsing solution conveyed in the second direction (B) is conveyed through a second filter (16) arranged in a dirt reservoir (14).

30. Method according to claim 29, **characterised in that** the rinsing solution, freed of contaminants, conveyed through the second filter (16) into the dirt reservoir (14) is fed back to the dishwasher (1).

31. Method according to claim 30, **characterised in that** the rinsing solution, freed of contaminants, is fed to the rinsing container (2) by way of an inlet opening (28) connecting the dirt reservoir (14) with the rinsing container (2).

32. Method according to claim 30, **characterised in that** the rinsing solution, freed of contaminants, is fed back to a pump pot (5) by way of the duct (13, 11), which connects the pump pot (5) with the dirt reservoir (14), after switching-off of the flow reversal.

## Revendications

1. Lave-vaisselle, notamment lave-vaisselle ménager, comprenant au moins un circuit d'eau essentiellement fermé, dans lequel la flotte de lavage est mise en circulation dans un premier sens conformément à une unité de commande de programme, la flotte de lavage, lors de la mise en circulation, étant transportée à travers un élément de filtrage pour filtrer des impuretés, **caractérisé en ce qu'**
- un dispositif (30) d'inversement du sens d'écoulement est ménagé, au moyen duquel une circulation de la flotte de lavage dans un second sens (B) opposé au premier sens (A) est rendue possible pour traverser un premier tamis (15) et en éliminer les impuretés, et
- **en ce que** le premier tamis (15) est disposé dans le circuit d'eau (6) de manière à ce que, lors de la mise en circulation de la flotte de lavage, il puisse être traversé de manière forcée aussi bien dans le premier sens que dans le second (B).

2. Lave-vaisselle selon la revendication 1, **caractérisé en ce que** le premier tamis (15) est disposé dans une conduite (8) raccordant un puisard de pompe (5) et une pompe (9) dans la partie d'amorçage (25) de la pompe (9).

3. Lave-vaisselle selon la revendication 1, **caractérisé en ce que** le premier tamis (15) est disposé dans une conduite (10) raccordant la pompe (9) et des dispositifs d'arrosage (3, 4) dans la partie sous pression (26) de la pompe (9).

4. Lave-vaisselle selon l'une quelconque des revendications précédentes, **caractérisé en ce que** le premier tamis (15) est réalisé comme tamis variable qui, lors de la mise en circulation de la flotte de lavage dans le premier sens (A), présente une autre ouverture de maille que lors de la mise en circulation de la flotte de lavage dans le second sens (B).

5. Lave-vaisselle selon la revendication 4, **caractérisé en ce que** le tamis (15), lors de la mise en circulation de la flotte de lavage dans le premier sens (A), est réalisé comme micro-tamis.

6. Lave-vaisselle selon l'une quelconque des revendications précédentes, **caractérisé en ce que** la charge du premier tamis (15) avec des impuretés est détectée par capteur afin d'ordonner une inversion du sens d'écoulement lors du dépassement d'une valeur limite prédéfinie de paramètre.

7. Lave-vaisselle selon la revendication 6, **caractérisé en ce que** la pression régnant dans la partie d'amorçage et/ou dans la partie sous pression (25, 26) de la pompe (9) est prise en considération en tant que paramètre pour le contrôle de la charge du premier tamis (15).

8. Lave-vaisselle selon la revendication 6 ou 7, **caractérisé en ce que** la vitesse de rotation de la pompe (9) est prise en considération en tant que paramètre pour le contrôle de la charge du premier tamis (15).

9. Lave-vaisselle selon l'une quelconque des revendications précédentes, **caractérisé en ce qu'**un réservoir de saletés (14) se trouvant en liaison active avec le premier circuit d'eau (6), destiné à recevoir les impuretés détachées du premier tamis (15) lorsque celui-ci est traversé dans le second sens (B), est ménagé.

10. Lave-vaisselle selon la revendication 9, **caractérisé en ce qu'**un second tamis (15) est disposé dans le réservoir de saletés (14).

11. Lave-vaisselle selon l'une quelconque des revendications précédentes, **caractérisé en ce que** le second tamis (16) est disposé en orientation verticale dans le réservoir de saletés (14).

12. Lave-vaisselle selon la revendication 10 ou 11, **caractérisé en ce que** le second tamis (16) est réalisé comme tamis variable qui présente une autre ouverture de maille selon le sens d'écoulement (C, D).

13. Lave-vaisselle selon l'une quelconque des revendications 9 à 12, **caractérisé en ce que** le réservoir de saletés (14) est disposé dans un second circuit d'eau du lave-vaisselle (1), de sorte que la flotte de lavage affluant dans le réservoir de saletés (14), libérée d'impuretés, peut être amenée en retour dans le réservoir de lavage (2) ou dans le puisard de pompe (5) par l'intermédiaire d'une ouverture d'admission (28).

14. Lave-vaisselle selon l'une quelconque des revendications 9 à 13, **caractérisé en ce que** dans le réservoir de saletés (14) est ménagé un capteur (18) destiné à déterminer le niveau de remplissage dans le réservoir de saletés (14), dont le signal de sortie peut être amené en retour à une unité de commande de programme pour la commande de l'inversion d'écoulement.

15. Lave-vaisselle selon l'une quelconque des revendications 9 à 14, **caractérisé en ce que** le réservoir de saletés (14) présente au moins un organe de réglage (20, 21, 22) destiné à influencer le sens d'écoulement à travers le second tamis (16).

16. Lave-vaisselle selon la revendication 15, **caractérisé en ce qu'**un premier organe de commande (21) est ménagé pour obturer l'ouverture d'admission raccordant le réservoir de saletés (14) et le réservoir de lavage (2).

17. Lave-vaisselle selon la revendication 15 ou 16, **caractérisé en ce qu'**un second organe de commande (20) est ménagé en tant que bifurcation afin de transporter la flotte de lavage amenée dans le réservoir de saletés (14) au choix sur l'un ou l'autre côté du second tamis (16).

18. Lave-vaisselle selon l'une quelconque des revendications précédentes, **caractérisé en ce que** l'ouverture de maille du premier et/ou du second tamis (15, 16) est modifiable par un actuateur ou par le sens d'écoulement à travers le tamis concerné (15, 16).

19. Lave-vaisselle selon l'une quelconque des revendications précédentes, **caractérisé en ce que** sur une sortie (27) du puisard de pompe (5) est disposée une vanne de fermeture (19) commandée par l'écoulement ou par un actuateur, laquelle, à l'état fermé, diminue la surface d'écoulement effective à une dimension prédéfinie.

20. Lave-vaisselle selon l'une quelconque des revendications précédentes, **caractérisé en ce qu'**un autre tamis (17) est disposé dans le puisard de pompe (5).

21. Lave-vaisselle selon l'une quelconque des revendications précédentes, **caractérisé en ce que** le dispositif (30) destiné à l'inversion du sens d'écoulement est formé par la pompe (9).

22. Lave-vaisselle selon l'une quelconque des revendications précédentes, **caractérisé en ce que** le dispositif (30) destiné à l'inversion du sens d'écoulement est formé par une seconde pompe (12).

23. Lave-vaisselle selon l'une quelconque des revendications précédentes, **caractérisé en ce que** le dispositif (30) destiné à l'inversion du sens d'écoulement peut être mis en fonction par impulsion pour un désencrassement amélioré du premier tamis (15).

24. Procédé destiné au fonctionnement d'un lave-vaisselle, notamment d'un lave-vaisselle ménager, dans lequel, dans un circuit d'eau essentiellement fermé, la flotte de lavage est mise en circulation dans un premier sens conformément à une unité de commande de programme et est transportée à travers un élément de filtrage pour filtrer des impuretés, **caractérisé en ce que** pour le nettoyage d'un premier tamis (15), une inversion du sens d'écoulement de la flotte de lavage est produite à travers le premier tamis (15), de sorte que la flotte de lavage est transportée à travers le premier tamis (15) dans un second sens (B) opposé au premier sens (A).

25. Procédé selon la revendication 24, **caractérisé en ce que**
- pendant la circulation de la flotte de lavage à travers le premier tamis (15) dans un premier sens (A), l'encrassement du premier tamis (15) est détecté, et
- **en ce que**, lorsqu'une valeur seuil prédéfinie de l'encrassement du premier tamis (15) est atteinte, l'inversion du sens d'écoulement à travers le premier tamis (15) est produite.

26. Procédé selon la revendication 24 ou 25, **caractérisé en ce que** la détection de l'encrassement de l'élément de filtrage est réalisée par capteur par contrôle de la vitesse de rotation d'une pompe (9) provoquant la circulation ou de la pression de la flotte de lavage régnant à proximité de la pompe (9).

27. Procédé selon la revendication 24, **caractérisé en ce que** l'exécution de l'inversion du sens d'écoulement est réalisée de manière commandée par programme à des moments prédéfinis d'un déroulement de programme de lavage.

28. Procédé selon l'une quelconque des revendications 24 à 27, **caractérisé en ce que** la section d'écoulement à travers le premier tamis (15) est agrandie pendant l'inversion du sens d'écoulement.

29. Procédé selon l'une quelconque des revendications 24 à 27, **caractérisé en ce que** la flotte de lavage transportée dans le second sens (B) est transportée à travers un second tamis (16) disposé dans un réservoir de saletés (14).

30. Procédé selon la revendication 29, **caractérisé en ce que** la flotte de lavage transportée dans le réservoir de saletés (14) à travers le second tamis (16), libérée d'impuretés, est de nouveau amenée au lave-vaisselle (1).

31. Procédé selon la revendication 30, **caractérisé en ce que** la flotte de lavage libérée d'impuretés est amenée au réservoir de lavage (2) par l'intermédiaire d'une ouverture d'admission (28) raccordant le réservoir de saletés (14) au réservoir de lavage (2).

32. Procédé selon la revendication 30, **caractérisé en ce que** la flotte de lavage libérée d'impuretés, après l'arrêt de l'inversion de l'écoulement, est amenée en retour dans le puisard de pompe (5) par l'intermédiaire de la conduite (13, 11) raccordant un puisard de pompe (5) au réservoir de saletés (14).
